# EUROPÄISCHE PATENTSCHRIFT

(11) **EP 0 396 931 B1**
(45) Veröffentlichungstag und Bekanntmachung des Hinweises auf die Patenterteilung: **27.04.1994**
(21) Anmeldenummer: 90107095.3
(22) Anmeldetag: 12.04.1990
(51) Int. Cl.: H02G 3/06, F16L 25/00, F16L 33/26, H01R 13/516

(54) **Endgehäuse für mehrpolige elektrische Steckverbinder**
Terminal housing for multipolar electrical plug connector
Boîtier de terminaison pour connecteur électrique multipolaire à fiche

(30) Priorität: 06.05.1989 DE 3914936
(43) Veröffentlichungstag der Anmeldung: 14.11.1990
(73) Patentinhaber: Deutsche Aerospace Airbus Gesellschaft mit beschränkter Haftung, 21129 Hamburg (DE)
(72) Erfinder: Kirma, Safa, D-2000 Wedel/Holstein (DE)

(56) Entgegenhaltungen:
- DE-A- 3 104 518
- FR-A- 2 589 979
- US-A- 3 784 730
- US-A- 3 934 902
- US-A- 4 747 621

## Beschreibung

Die Erfindung bezieht sich auf ein Endgehäuse für mehrpolige elektrische Steckverbinder, bestehend aus einem Übergangsteil mit einem steckverbindungsseitigen Ende und einem kabelseitigen Ende zum Anschluß von Kabelbäumen, die durch Schutzschläuche umgeben sind, wobei das Übergangsteil als Hohlkörper ausgebildet ist und einen zylindrischen Aufnahmebereich für eine Halterung des Steckverbinders aufweist und bei dem das dem Schutzschlauch zugewandte Ende des Übergangsteils eine Aufnahme für ein Befestigungselement aufweist.

Bei Anordnungen dieser Art besteht das Problem, das das Einsetzen der Steckverbinder in entsprechende Geräte durch die entsprechenden Schutzschläuche erschwert wird und auf einem Raum mit einer Vielzahl von Steckverbindungsanschlüssen oftmals nicht durchführbar ist. Dabei ist von besonderer Bedeutung, daß bei Anordnungen mit Schutzschläuchen zur elektrischen Abschirmung oder für den Blitzschutz elektrische Verbindungen nicht durch die Anschlußelemente unterbrochen werden dürfen.

Aus der US-A-3 934 902 ist bereits ein Endgehäuse bekannt, das mit einem Aufnahmebereich versehen ist, in den ein Übergangsteil eingreift, das einen als Wellschlauch ausgebildeten Schutzschlauch fixiert. Das Übergangsteil weist dazu im Bereich seiner dem Schutzschlauch zugewandten Ausdehnung ein Innenprofil auf, das mit einem Spiel in das Außenprofil des Schutzschlauches eingreift. Zusätzlich weist das Übergangsteil ein Außengewinde auf, das in einem Innengewinde des Übergangsteiles gehaltert ist. Mit Hilfe des Befestigungselementes erfolgt ein Verspannen des Schutzschlauches relativ zum Endgehäuse. Es ist somit nicht möglich, in einem montierten Zustand eine Drehbewegung zwischen dem Schutzschlauch und dem Endgehäuse durchzuführen.

Die Aufgabe der Erfindung ist es, gattungsgemäße Endgehäuse zu verbessern, die einen einfachen Aufbau zur Montage und Demontage aufweisen sowie die Durchführung einer verdrehbaren Steckverbindung ermöglichen und - soweit erforderlich - auch eine elektrische Verbindung gewährleisten.

Die Lösung dieser Aufgabe erfolgt erfindungsgemäß dadurch, daß das Befestigungselement mit seinem einen Ende einen Endbereich des Schutzschlauches als Profilschlauch kraftschlüssig umgreift und mit seinem anderen Ende drehbeweglich an der Aufnahme gehaltert ist.

Alternativ ist vorgesehen, daß das Übergangsteils an der dem Steckverbinder zugewandten Seite ein zylindrisches Aufnahmeelement mit einer korrespondierenden Halterung zur drehbeweglichen Verbindung angeordnet ist und an dessen anderem Ende ein Befestigungselement angeformt ist, das das Ende eines Schutzschlauches formschlüssig umgreift.

Hierdurch wird mit einem einfachen Aufbau die Drehbeweglichkeit gegenüber dem Schutzschlauch aufrechterhalten, um Verbindungen aufzubauen bzw. zu lösen und gleichzeitig eine gute elektrische Verbindung aufrechtzuerhalten.

Vorteilhafte Ausgestaltungen der Erfindung sind durch die Merkmale der Unteransprüche gekennzeichnet.

In der Zeichnung sind Ausführungsbeispiele der Erfindung schematisch dargestellt. Es zeigen:
- Fig. 1 bis 4: Endgehäuseausbildungen mit einer Drehbeweglichkeit im Bereich des Schutzschlauches,
- Fig. 5 bis 11: Endgehäuseausbildungen mit einer Drehbeweglichkeit am steckerseitigen Ende der Aufnahme.

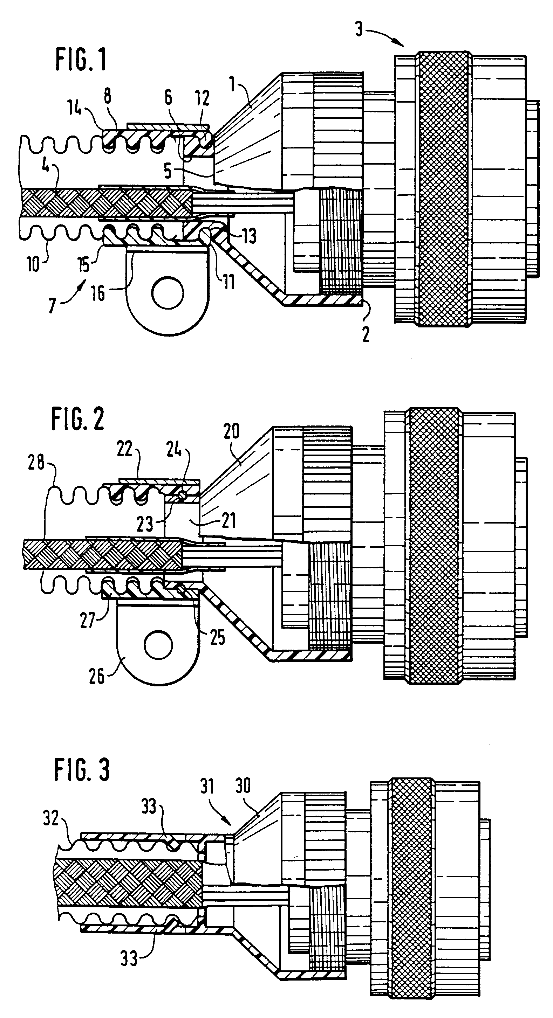

Bei der Ausbildung gemäß Fig. 1 nimmt ein Schutzschlauch 10 in Form eines Wellringschlauches einen Kabelbaum 4 aus einzelnen Drähten auf, der an einem Steckverbinder 3 angeschlossen ist. Zur Verbindung zwischen Schutzschlauch 10 und Steckverbinder 3 ist ein Übergangsteil 1 als Hohlkörper angeordnet, das mit seinem einen Ende 2 über ein Gewinde mit dem Steckverbinder 3 koppelbar ist. Hierzu ist das Übergangsteil 1 mit seinem Ende 5 drehbar gegenüber einem Ende 9 des Schutzschlauches 10 angeordnet, indem ein Befestigungselement 7 den Schutzschlauch 10 kraftschlüssig umgreift und sein anderes Ende 11 mit einer Wulst 13 in eine umlaufende Nut 12 einer Aufnahme 6 am Übergangsteil 1 eingreift. Das Befestigungselement 7 besteht hierbei aus Halbschalen 14,15, die durch ein Spannelement 16 in Form einer Schelle zusammengehalten sind. Die Innenfläche des Befestigungselementes 7 ist entsprechend der Profilierung des Schutzschlauches 10 ausgebildet.

In einem weiteren Ausführungsbeispiel gemäß Fig. 2 ist ein Übergangsteil 20 angeordnet, das eine Aufnahme 21 aufweist und ein mit dem Schutzschlauch 28 verbundenes Befestigungselement 22 besitzt. Da der Schutzschlauch 28 als Wendelschlauch ausgebildet ist, ist das Befestigungselement 22 als einstückiges Rohrelement ausgebildet, wobei Aufnahme 21 und Befestigungselement 22 korrespondierende umlaufende Nuten 23,24 besitzen und Sprengring 25 für eine drehbewegliche Zuordnung eingesetzt ist. Eine das Befestigungselement 22 umfassende Schelle 26 ist lediglich zur Potentialableitung angeordnet.

In der Ausführung nach Fig. 3 ist ein Übergangsteil 30 angeordnet, das mit einem Befestigungselement 31 eine Einheit bildet. Das Befestigungselement 31 besitzt elastische Rastelemente 33, die in die Profilierung des Schutzschlauches 32 einrasten.

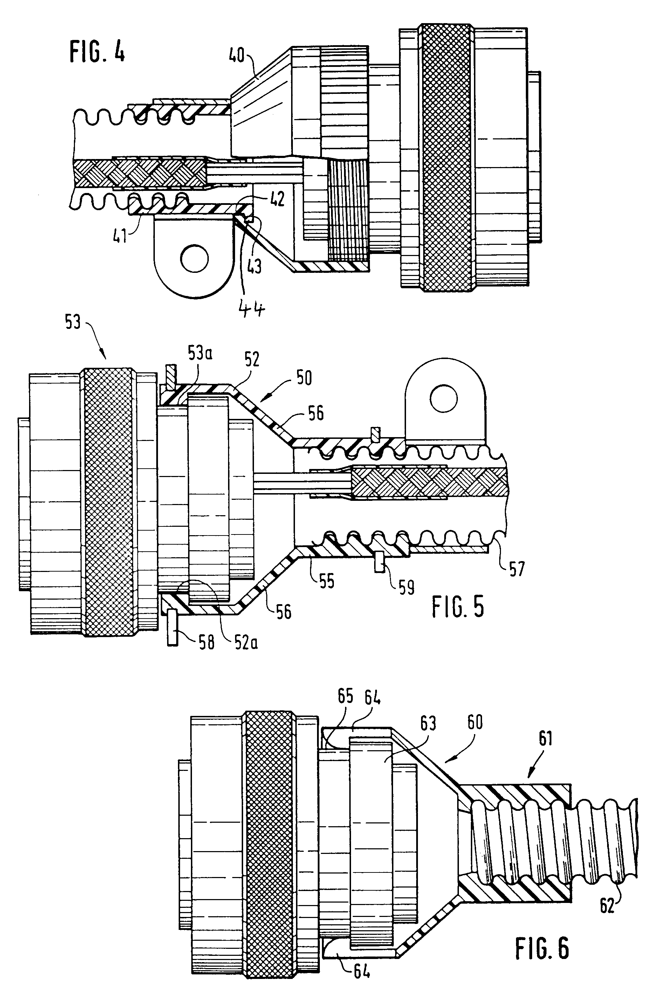

Bei der Ausbildung gemäß Fig. 4 wird eine Aufnahme 42 für ein Befestigungselement 41 aus einer Öffnung mit einer Rückhaltefläche 43 gebildet, die einen korrespondierenden Bund 44 des Befestigungselementes 41 drehbeweglich festlegt.

In einer alternativen Ausgestaltung ist das Übergangsteil 50 an der einem Steckverbinder 53 zugewandten Seite drehbeweglich gelagert. Dabei ist ein zylindrisches Aufnahmeelement 52 mit einer Wulst 52a versehen, die in eine umlaufende Nut 53a des Steckverbinders eingreift. Am anderen Ende 54 des Übergangsteils 50 ist ein Befestigungselement 55 angeformt, das das Ende eines profilierten Schutzschlauches 57 formschlüssig umgreift. Das Übergangsteil 50 ist aus Halbschalen, 56,57 gebildet, die durch Spannelemente in Form von Sprengringen 58,59 zusammengehalten werden.

Gemäß Fig. 6 wird entsprechend Fig. 5 die Drehbeweglichkeit des Übergangsteils 60 durch Rasthaken 64 gebildet, die in eine umlaufende Nut 65 des Steckverbinders 63 eingreifen. Der Schutzschlauch 62 ist hierbei als Wendelschlauch ausgebildet, so daß das Befestigungselement 61 einstückig einschließlich des Übergangsteils 60 ausgebildet werden kann und somit auf den Wendelschlauch aufschraubbar ist.

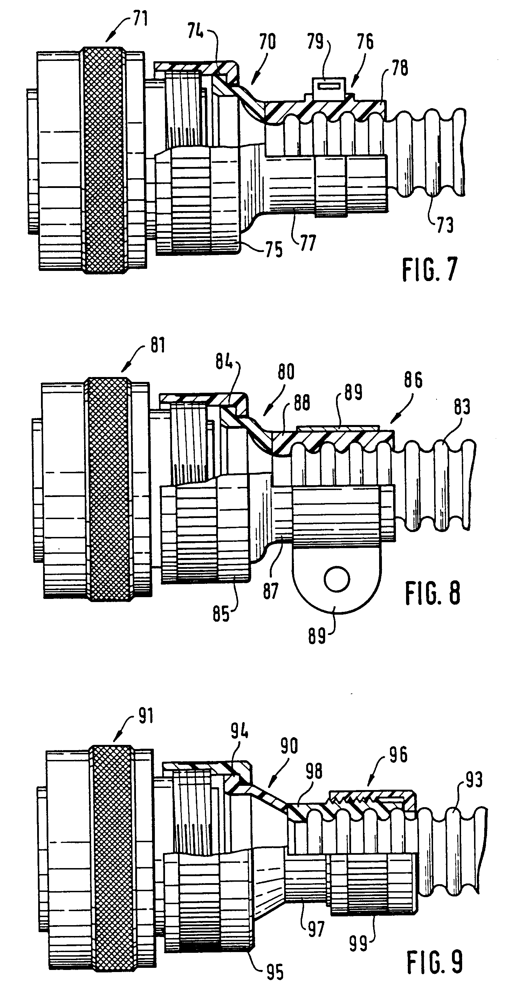

Gemäß den Ausbildungen nach Fig. 7 bis 9 sind die Befestigungselemente 76,86 und 96 über Übergangsteil 79,80,90 durch eine Überwurfmutter 75,85 und 95 mit dem Steckverbinder 71,81 bzw. 91 drehbeweglich gekoppelt, wobei ein flanschartiger Halterand 74,84,94 des Übergangsteiles 70,80,90 erfaßt wird.

In Fig. 7 ist ein Schutzschlauch 73 durch zwei Hälften 77 und 78 des Befestigungselementes 76 erfaßt, die durch einen Kabelbinder 79 zusammengehalten werden. Dabei ist das Teil 77 mit dem Übergangsteil 70 fest verbunden, während das Teil 78 als Einzelelement positionierbar ist. Gemäß Fig. 8 ist als Spannelement abweichend eine Schelle 89 angeordnet, die die Schalen 87 und 88 zur Fixierung auf dem Schutzschlauch 83 zusammenhält.

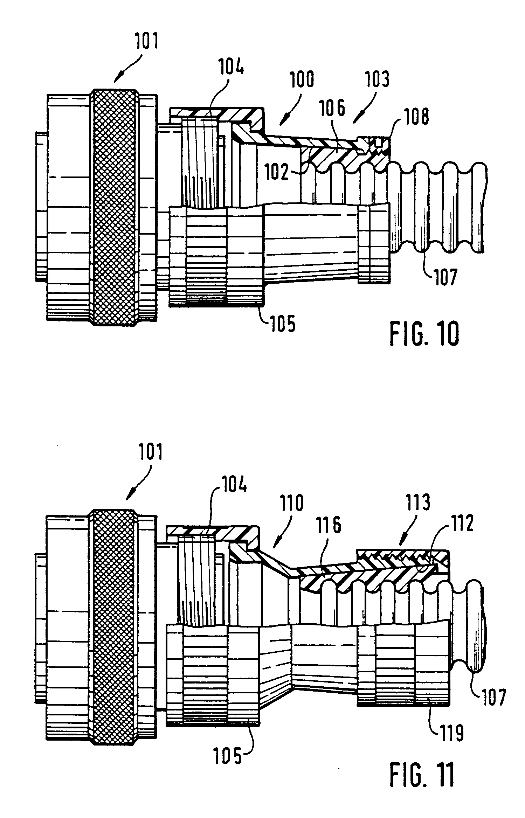

In der Ausbildung gemäß Fig. 9 wird als Spannelement eine Verschraubung 99 zum Halten der Schalen 97 und 98 auf dem Schutzschlauch 93 vorgesehen.

Gemäß Fig. 10 ist das Befestigungselement 103 des Steckverbinders 101 mit seiner Innenfläche 102 als Kegelhülse ausgebildet. Hierbei sind zugeordnete Klemmelemente 106 mit ihrer Innenfläche an die Profilierung des Schutzschlauches 107 angepaßt, wobei die Klemmelemente 106 mittels einer Verschraubung 108 axial gegenüber dem Befestigungselement 103 verschiebbar sind. Hierdurch wird eine Klemmwirkung ausgeübt. An dem steckerseitigen Ende ist das Übergangsteil 100 ebenfalls in vorbeschriebener Weise über eine Schraubverbindung 104,105 gehalten.

Eine entsprechende Anordnung ist gemäß Fig. 11 dargestellt. Hierbei ist die Innenfläche 112 des Befestigungselementes 113 als Kegelhülse verschiebbar in entgegengesetzter Richtung geneigt und das Klemmelement 116 ist über ein Schraubelement 119 an dem Befestigungselement 113 verschiebbar zur Erzielung einer Klemmwirkung angeordnet.

## Patentansprüche

1. Endgehäuse für mehrpolige elektrische Steckverbinder (53), bestehend aus einem Übergangsteil (1,10) mit einem steckverbindungsseitigen Ende und einem kabelseitigen Ende (5) zum Anschluß von Kabelbäumen (4), die durch Schutzschläuche (10) umgeben sind, wobei das Übergangsteil (1,10) als Hohlkörper ausgebildet ist und einen zylindrischen Aufnahmebereich für eine Halterung des Steckverbinders aufweist und bei dem das dem Schutzschlauch (10) zugewandte Ende (5) des Übergangsteils (1,10) eine Aufnahme (6,21) für ein Befestigungselement (7,22) aufweist, dadurch gekennzeichnet, daß das Befestigungselement (7,22) mit seinem einen Ende (8) einen Endbereich (9) des Schutzschlauches (10) als Profilschlauch kraftschlüssig umgreift und mit seinem anderen Ende (11) drehbeweglich an der Aufnahme (6,21) gehaltert ist.

2. Endgehäuse nach Anspruch 1, dadurch gekennzeichnet, daß die Aufnahme (6) für das Befestigungselement (7) eine umlaufende Nut (12) aufweist, in die eine Wulst (13) des die Aufnahme (6) drehbeweglich umschließenden Befestigungselements (7) eingreift.

3. Endgehäuse nach Anspruch 1, dadurch gekennzeichnet, daß die Aufnahme (21) und das Befestigungselement (22) korrespondierende umlaufende Nuten (23,24) zur Aufnahme eines Sprengringes (25) für eine drehbewegliche Zuordnung aufweisen.

4. Endgehäuse nach Anspruch 1, dadurch gekennzeichnet, daß das Befestigungselement (31) mit dem Übergangsteil (30) des Steckverbinders eine Einheit bildet und das Befestigungselement (31) über elastische Rastelemente (33) auf dem Ende des aufgenommenen profilierten Schutzschlauches (32) festsetzbar ist.

5. Endgehäuse nach Anspruch 3, dadurch gekennzeichnet, daß das Befestigungselement (27) als einstückiges Rohrelement ausgebildet ist.

6. Endgehäuse nach Anspruch 3, dadurch gekennzeichnet, daß das Befestigungselement (22) aus zwei Halbschalen besteht.

7. Endgehäuse nach einem der Ansprüche 1 bis 6, dadurch gekennzeichnet, daß die Innenfläche des Befestigungselementes (7,22) entsprechend der Profilierung des Schutzschlauches wie ein Wellringschlauch (10,32) bzw. Wendelschlauch (28) ausgebildet ist.

8. Endgehäuse nach einem der Ansprüche 1 bis 7, dadurch gekennzeichnet, daß die Aufnahme (42) für das Befestigungselement (41) aus einer Öffnung mit einer Rückhaltefläche (43) besteht mit der das Befestigungselement (41) mit einem korrespondierenden Bund (44) festlegbar ist.

9. Endgehäuse für mehrpolige elektrische Steckverbinder (53), bestehend aus einem Übergangsteil (50,60) mit einem steckverbindungsseitigen Ende und einem kabelseitigen Ende (5) zum Anschluß von Kabelbäumen (4), die durch Schutzschläuche (57) umgeben sind, wobei das Übergangsteil (50,60) als Hohlkörper ausgebildet ist und einen zylindrischen Aufnahmebereich für eine Halterung des Steckverbinders (53) aufweist, dadurch gekennzeichnet, daß das Übergangsteils (50,60) an der dem Steckverbinder (53) zugewandten Seite ein zylindrisches Aufnahmeelement (52) mit einer korrespondierenden Halterung (52a,53a) zur drehbeweglichen Verbindung angeordnet ist und an dessen anderem Ende (54) ein Befestigungselement (55,61) angeformt ist, das das Ende (56) des Schutzschlauches (57) formschlüssig umgreift.

10. Endgehäuse nach Anspruch 9, dadurch gekennzeichnet, daß das Übergangsteil (70) über einen flanschartigen Halterand (74) durch eine Überwurfmutter (75) am Steckbverbinder (71) drehbeweglich gehalten ist.

11. Endgehäuse nach Anspruch 9 oder 10, dadurch gekennzeichnet, daß das Übergangsteil (70,80,90) im Bereich des Befestigungselementes (76) aus einer angeformten Halbschale (77,87,97) und einer losen Halbschale (78,88,98) besteht und der Schutzschlauch (73,83,93) über ein die Halbschalen (77,87,97,78,88,98) umfassendes Spannelement (79,99) einspannbar ist.

12. Endgehäuse nach einem der Ansprüche 9 bis 11, dadurch gekennzeichnet, daß die Innenfläche (102,112) des Befestigungselementes (103,113) als Kegelhülse ausgebildet und zugeordnete Klemmelemente (106,116) mit ihrer Innenfläche an die Profilierung des Schutzschlauches (107) angepaßt sind, wobei die Klemmelemente (106,116) mittels einer Verschraubung (108,119) axial gegenüber dem Befestigungselement (103) bzw. dem Klemmelement (113) angeordnet sind.

## Claims

1. An end housing for multi-pole electrical plug connectors (53), consisting of a transition part (1, 10) with a plug-connection-side end and a cable-side and (5) for the connection of cable harnesses (4) which are surrounded by protective tubes (10), the transition part (1, 10) being designed as a hollow body and having a cylindrical reception region for a holder of the plug connector and in which that end (5) of the transition part (1, 10) which faces the protective tube (10) has a receiver (6, 21) for a fastening component (7, 22), characterised in that the fastening component (7, 22) with its one end (8) embraces in a force-locking manner an end region (9) of the protective tube (10) as a profile tube and with its other end (11) is held so as to be rotationally movable on the receiver (6, 21).

2. An end housing according to claim 1, characterised in that the receiver (6) for the fastening component (7) has an encircling groove (12), into which a bead (13) of the fastening component (7) enclosing the receiver (6) in a rotationally movable manner engages.

3. An end housing according to claim 1, characterised in that the receiver (21) and the fastening component (22) have corresponding encircling grooves (23, 24) for the reception of a spring ring (25) for a rotationally movable association.

4. An end housing according to claim 1, characterised in that the fastening component (31) forms one unit with the transition part (30) of the plug connector and the fastening component (31) is securable by way of elastic detent components (33) on the end of the received profiled protective tube (32).

5. An end housing according to claim 3, characterised in that the fastening component (27) is designed as a one-piece pipe component.

6. An end housing according to claim 3, characterised in that the fastening component (22) consists of two half shells.

7. An end housing according to any one of claims 1 to 6, characterised in that the inner surface of the fastening component (7, 22) is designed in accordance with the profiling of the protective tube as a corrugated ring tube (10, 32) or respectively helical tube (28).

8. An end housing according to any one of claims 1 to 7, characterised in that the receiver (42) for the fastening component (41) consists of an aperture having a retention surface (43) with which the fastening component (41) can be secured in position with a corresponding collar (44).

9. An end housing for multi-pole electrical plug connectors (53), consisting of a transition part (50, 60) with a plug-connection-side end and a cable-side end (5) for the connection of cable harnesses (4) which are surrounded by protective tubes (57), the transition part (50, 60) being designed as a hollow body and having a cylindrical reception region for a holder of the plug connector (53), characterised in that the transition part (50, 60) on the side facing the plug connector (53) a cylindrical reception component (52) with a corresponding holder (52a, 53a) for the rotationally movable connection is arranged and at the other end (54) thereof a fastening component (55, 61) is integrally formed, which embraces in a form-locking manner the end (56) of the protective tube (57).

10. An end housing according to claim 9, characterised in that the transition part (70) is held so as to be rotationally movable by way of a flange-like retaining edge (74) by a cap nut (75) on the plug connector (71).

11. An end housing according to claim 9 or 10, characterised in that the transition part (70, 80, 90) in the region of the fastening component (76) consists of an integrally formed half shell (77, 87, 97) and a loose half shell (68, 88, 98) and the protective tube (73, 83, 93) can be clamped by way of a clamping component (79, 99) surrounding the half shells (77, 87, 97, 78, 88, 98).

12. An end housing according to any one of claims 9 to 11, characterised in that the inner surface (102, 112) of the fastening component (103, 113) is designed as a taper sleeve and associated clamping components (106, 116) are adapted with their inner surface to the profiling of the protective tube (107), the clamping components (106, 116) being arranged by means of a screw joint (108, 119) axially relative to the fastening component (103) or the clamping component (113).

## Revendications

1. Boîtier d'extrémité pour un connecteur électrique enfichable (53) à plusieurs pôles, comprenant une pièce de transition (1, 10) avec une extrémité située du côté du connecteur et une extrémité (5) située du côté du câble, pour raccorder des faisceaux de câble (4) entourés par des tubes de protection (10), la pièce de transition (1, 10) étant en forme de corps creux avec une zone de réception cylindrique pour fixer le connecteur, et l'extrémité (5) de la pièce de transition (1, 10) tournée vers le tube de protection (10) comportant un moyen de réception (6, 21) pour un élément de fixation (7, 22), boîtier caractérisé en ce que l'élément de fixation (7, 22) entoure, par l'une de ses extrémités (8), une zone d'extrémité (9) du tube de protection (10) en forme de tube profilé, et l'autre extrémité (11) est maintenue mobile en rotation par rapport au moyen de réception (6, 21).

2. Boîtier d'extrémité selon la revendication 1, caractérisé en ce que le moyen de réception (6) comporte une rainure périphérique (12) dans laquelle se loge un bourrelet (13) de l'élément de fixation (7) entourant le moyen de réception (6), de façon libre en rotation.

3. Boîtier d'extrémité selon la revendication 1, caractérisé en ce que le moyen de réception (21) et l'élément de fixation (22) comportent des rainures périphériques (23, 24) correspondantes, pour recevoir un anneau fendu (25) pour une liaison libre en rotation.

4. Boîtier d'extrémité selon la revendication 1, caractérisé en ce que l'élément de fixation (31) forme un ensemble avec la pièce de transition (30) du connecteur et cet élément de fixation (31) se monte par des éléments d'encliquetage élastique (33) sur l'extrémité du tube de protection (33) profilé, mis en place.

5. Boîtier d'extrémité selon la revendication 3, caractérisé en ce que l'élément de fixation (27) est en forme d'élément tubulaire d'une seule pièce.

6. Boîtier d'extrémité selon la revendication 3, caractérisé en ce que l'élément de fixation (22) est constitué par deux demi-coquilles.

7. Boîtier d'extrémité selon l'une des revendications 1 à 6, caractérisé en ce que la surface intérieure de l'élément de fixation (7, 22) est réalisée de manière correspondant au profil du tube de protection, tel qu'un tube à ondulations (10, 32) ou un tube à spires (28).

8. Boîtier d'extrémité selon l'une des revendications 1 à 7, caractérisé en ce que le moyen de réception (42) de l'élément de fixation (41) se compose d'une ouverture avec une surface de retenue (43) qui bloque l'élément de fixation (41) par un collet correspondant (44).

9. Boîtier d'extrémité pour un connecteur électrique enfichable (53) à plusieurs pôles, composé d'une pièce de transition (50, 60) avec une extrémité située du côté du connecteur enfichable et une extrémité (5) correspondant au côté du câble, pour raccorder des faisceaux de câble (4) entourés par des tubes de protection (57), la pièce de transition (50, 60) étant en forme de corps creux avec une zone de réception pour fixer le connecteur (53), caractérisé en ce que la pièce de transition (50, 60) comporte, sur son côté tourné vers le connecteur (53), un élément de réception (52) cylindrique muni d'un moyen de fixation (52a, 53a) correspondant, pour une liaison libre en rotation, et dont l'autre extrémité (54) est en forme d'élément de fixation (55, 61) entourant l'extrémité (56) du tube de protection (57), par une liaison de forme.

10. Boîtier d'extrémité selon la revendication 9, caractérisé en ce que la pièce de transition (70) est maintenue libre en rotation sur le connecteur enfichable (71) par un bord de retenue (74) en forme de bride, d'un écrou chapeau (75).

11. Boîtier d'extrémité selon la revendication 9 ou 10, caractérisé en ce que, au niveau de l'élément de fixation (76), la pièce de transition (70, 80, 90) se compose d'une demi-coquille (77, 87, 97) formée dans la pièce et d'une demi-coquille (78, 88, 98) indépendante et le tube de protection (73, 83, 93) se fixe par un élément de serrage (79, 99) entourant les demi-coquilles (77, 87, 97, 78, 88, 98).

12. Boîtier d'extrémité selon l'une des revendications 9 à 11, caractérisé en ce que la surface (110, 112) de l'élément de fixation (103, 113) est en forme de douille conique et les éléments de serrage correspondants (106, 116) sont adaptés par leur surface intérieure contre le profil du tube de protection (107), les éléments de serrage (106, 116) étant fixés axialement par rapport à l'élément de fixation (103) ou à l'élément de serrage (113), par une liaison vissée (108, 119).
